# EUROPÄISCHE PATENTSCHRIFT

(11) **EP 3 036 451 B1**
(45) Veröffentlichungstag und Bekanntmachung des Hinweises auf die Patenterteilung: **14.06.2017**
(21) Anmeldenummer: 14795935.7
(22) Anmeldetag: 20.08.2014
(51) Int. Cl.: F16D 13/68, F16D 13/64

(54) **KUPPLUNGSSCHEIBE**
CLUTCH DISC
DISQUE D'EMBRAYAGE

(30) Priorität: 23.08.2013 AT 505232013
(43) Veröffentlichungstag der Anmeldung: 29.06.2016
(73) Patentinhaber: Miba Frictec GmbH, 4663 Laakirchen (AT)
(72) Erfinder: MÜHLEGGER, Markus, A-4812 Pinsdorf (AT)
(74) Vertreter: Burger, Hannes
(86) Internationale Anmeldenummer: PCT/AT2014/050179
(87) Internationale Veröffentlichungsnummer: WO 2015/024039

(56) Entgegenhaltungen:
- EP-A2- 0 311 844
- DE-A1- 4 319 150
- DE-A1- 10 243 718

## Beschreibung

Die Erfindung betrifft eine Kupplungsscheibe für eine Reibungskupplung, umfassend einen scheibenförmigen Grundkörper mit einem Trägerelement, wobei das Trägerelement einen äußeren Umfang aufweist, über den verteilt mehrere Aufnahmebereiche für flügelartige Reibbaugruppen angeordnet sind, wobei die Reibbaugruppen mit dem Trägerelement verbunden sind, wobei die Reibbaugruppen jeweils einen ersten Reibbelag und einen zweiten Reibbelag aufweisen, wobei die ersten Reibbeläge auf ersten Reibbelagsträgern angeordnet sind, die ersten Reibbelagsträger mit einem Federelemente verbunden sind und die Federelemente mit den Trägerelement verbunden sind, und wobei die zweiten Reibbeläge auf zweiten Reibbelagsträgern angeordnet sind, und wobei weiter die Federelemente zwischen den ersten und den zweiten Reibbelagsträgern angeordnet sind.

Für Kupplungsscheiben mit Reibbelägen sind im Stand der Technik bereits unzählige Ausführungsformen beschrieben worden.

So beschreibt z.B. die DE 29 20 095 A1 eine Reibbelagbefestigung, insbesondere für metallische bzw. metall-keramische Reibbeläge, von Kraftfahrzeug-Kupplungs scheiben, bestehend unter anderem aus in Fassungen gehaltenen Reibbelägen, welche paarweise einander gegenüberliegend an federnden Belagträgern angeordnet sind, wobei jeweils zwei gleiche Belagträger wechselseitig, mit ihren Wölbungen konvex einander zugekehrt, angeordnet sind, und jeder Reibbelag mit seiner Fassung über wenigstens zwei Befestigungsniete mit dem ihm zugeordneten Belagträger verbunden ist und sämtliche Befestigungsniete der beiden gegenüberliegenden Belagträger so über die vorhandene Fläche verteilt sind, dass gegenüber einer Symmetrielinie insbesondere der Belagträger eine symmetrische Verteilung vorliegt, ohne gegenseitige Überdeckung. Jeder Belagträger weist im Bereich der Projektion der Befestigungsniete des gegenüberliegenden Belagträgers entsprechende Durchbrechungen auf. Weiter weisen die Fassungen der Reibbeläge ebenfalls deckungsgleich zu den Belagträgern Durchbrechungen auf. Zwischen den beiden Belagträgern auf der Symmetrielinie ist wenigstens ein Abstandsniet zur Vorspannung der Belagträger angeordnet.

Die Anordnung der Reibbeläge auf federnden Belagträgern erfolgt vorwiegend deshalb, damit die metallischen bzw. metall-keramischen Reibbeläge beim Einrücken keine Schläge bzw. Stöße erfahren, wodurch diese Reibbeläge unter umständen frühzeitig Beschädigungen erleiden. Derartige metallische bzw. metall-keramische Reibbeläge sind nämlich im Vergleich zu anderen Reibbelägen, beispielsweise aus harzgebundenen Fasern, deutlich weniger elastisch. Andererseits bieten diese metallischen bzw. metall-keramischen Reibbeläge im Vergleich zu anderen Reibbelägen den Vorteil, dass damit höhere Drehmomente übertragen werden können. Mit der federnden Anordnung der Reibbeläge kann aber auch erreicht werden, dass die Dosierbarkeit der Kupplung beim Einkuppeln verbessert werden kann.

Aus der US 5,857,551 A sind verschiedene Ausführungsformen einer Kupplungsscheibe bekannt. In einer ersten Ausführungsform sind die Reibbeläge auf drei Reibbaugruppen verteilt angeordnet, wobei auf den Belagträgern in Umfangsrichtung zwei Reibbeläge nebeneinander angeordnet sind, wie dies aus Fig. 2 der US 5,857,551 A ersichtlich ist. Es werden also bei dieser Ausführungsvariante der Kupplungsscheibe nach der US 5,857,551 A nicht jeweils zwei Reibbeläge auf jeweils gesonderten, flügelartigen Belagträgern angeordnet, wie dies in der voranstehend beschriebenen DE 29 20 095 A1 der Fall ist.

Die Reibbeläge sind bei dieser ersten Ausführungsvariante der Kupplungsscheibe nach der US 5,857,551 A einerseits durch Verstemmen mit den Belagträgern und andererseits durch Vernieten befestigt, wobei die eigentlichen Reibbeläge selbst auf Reibbelagträgern aufgesintert sind. Zum Verstemmen der Reibbelagträger mit den Belagträgern sind letztere auf drei Seiten ungebogen und weisen weiter eine umgebogenen Lasche auf, sodass also die Reibbelagträger allseitig formschlüssig mit den Belagträgern verbunden sind.

Bei dieser Ausführungsvariante sind die Reibbeläge einerseits federend, wie in der DE 29 20 095 A1 beschrieben, und andererseits starr über die Verstemmung befestigt.

Die US 5,857,551 A beschreibt noch eine weitere Ausführungsvariante einer Kupplungsscheibe, bei der analog zur DE 29 20 095 A1 jeweils zwei Reibbeläge auf jeweils gesonderten, flügelartigen Belagträgern angeordnet sind. Bei dieser Ausführungsvariante, die in Fig. 5 der US 5,857,551 A dargestellt ist, sind also die Belagträger also nur mehr ca. halb so groß wie bei der ersten Ausführungsvariante. Verbunden damit beschreibt die US 5,857,551 A, dass sämtliche Reibbeläge federnd befestigt sind, wie dies bereits aus der DE 29 20 095 A1 bekannt ist. Es wird also von der starren Befestigung eines Teils der der Reibbeläge abgegangen.

Der vorliegenden Erfindung liegt die Aufgabe zugrunde, eine Kupplungsscheibe der eingangs genannten Art zu verbessern, insbesondere hinsichtlich ihres Reibverhaltens.

Zur Lösung dieser Aufgabe ist vorgesehen, dass bei der eingangs genannten Kupplungsscheibe die zweiten Reibbelagsträger direkt mit dem Trägerelement verbunden sind.

Von Vorteil ist dabei, dass durch die starre Anordnung der zweiten Reibbeläge einerseits und durch den Entfall der im Stand der Technik verwendeten Reibbelagsträger für die zweiten Reibbeläge die Auslenkung am Innendurchmesser der Reibbaugruppen im Vergleich zum Stand der Technik verringert und dafür am Außendurchmesser der Reibbaugruppen vergrößert wird. Es wird damit der effektive Reibradius im ersten Augenblick des Einkuppelns erhöht, womit in der Folge das übertragbare Moment in diesem Zeitraum ebenfalls erhöht werden kann. Andererseits ist damit aber auch eine höhere Sicherheit der Momentenübertragung erreichbar, was insbesondere beim Einlauf der Kupplungsscheibe bei niedrigen Reibwerten von Bedeutung ist. Weiter wird durch die direkte Verbindung der Reibbelagsträger mit dem Trägerelement des Grundkörpers der Kupplungsscheibe erreicht, dass bei gleicher Bauraumgröße - verglichen mit Kupplungsscheiben aus dem Stand der Technik, die zweiten Reibbeläge dicker ausgeführt werden können, wodurch diese ein höheres Verschleißvolumen aufweisen, also die Kupplungsscheibe über einen längeren Zeitraum betrieben werden kann. Umgekehrt ist bei gleicher Schichtstärke der zweiten Reibbeläge und der Reibbeläge aus dem Stand der Technik eine Gewichtsreduktion bei der Kupplungsscheibe nach der Erfindung realisierbar und damit eine Reduktion der Massenträgheit erreichbar, wodurch das Kupplungsverhalten bzw. das Reibverhalten der Kupplungsscheibe ebenfalls verbessert werden kann.

Mit der Erfindung ist es also möglich, für die zweiten Reibbeläge auf die in der US 5,857,551 A als Kernplatten bezeichneten Träger der Reibbeläge zu verzichten. Ein derartiger Verzicht ist bei der Ausführungsvariante der Kupplungsscheibe nach der US 5,857,551 A nicht möglich, da diese Kernplatten für das Verstemmen mit dem Trägerelementen, die mit dem Grundkörper der Kupplungsscheibe vernietet werden, erforderlich ist, da ein direktes Verstemmen des Reibbelags selbst mit dem Trägerelement aufgrund der Materialeigenschaften des Reibbelags nicht möglich ist bzw. würde damit das Reibvolumen der Reibbeläge deutlich reduziert, da die Reibbeläge nur bis zu den umgebogenen Kanten verschlissen werden können.

Nach einer Ausführungsvariante der Kupplungsscheibe ist vorgesehen, dass die zweiten Reibbeläge mit den zweiten Reibbelagsträgern stoffschlüssig oder über eine Klebeverbindung verbunden sind. Durch die nietlose Verbindung der zweiten Reibbeläge mit den zweiten Reibbelagsträgern kann das zur Verfügung stehende Verschleißvolumen der Reibbeläge weiter erhöht werden, wodurch die Betriebsdauer der Kupplungsscheibe ebenfalls weiter erhöht werden kann.

Es kann weiter vorgesehen sein, dass die zweiten Reibbelagsträger größer sind als die zweiten Reibbeläge, sodass die zweiten Reibbeläge beabstandet zu in Richtung des äußeren Umfangs nebeneinander ausgebildeten Seitenkanten der Reibbelagsträger auf diesen angeordnet sind, wobei die Seitenkanten der Reibbelagsträger umgebogen sind. Zum Unterschied zu der in der US 5,857,551 A beschriebenen Ausführungsform einer Kupplungsscheibe sind die umgebogenen Seitenränder also nicht für das Verstemmen der Kernplatten der Reibbeläge mit dem Reibbelagträger vorgesehen. Durch die größeren zweiten Reibbelagsträger kann den flügelartigen Reibbaugruppen eine bessere Stabilität verliehen werden. Dabei sind die Umbiegungen der Seitenkanten von Vorteil, da damit bei geringerer Schichtdicke der zweiten Reibbelagsträger bei höheren Drehzahlen resistenter gegen Verformungen ist, wodurch auch die zweiten Reibbeläge selbst einer geringeren bzw. keiner Verformung bei höheren Drehzahlen unterliegen. Dies wiederum ermöglicht durch die Vermeidung von so genannten "hot spots" einen gleichmäßigeren Verschleiß der zweiten Reibbeläge. Letzteres ermöglicht eine längere Nutzungsdauer der Kupplungsscheibe. Zudem kann mit dieser Ausführung erreicht werden, dass das Lüftspiel einfacher eingehalten werden kann, wodurch die Erzeugung von Schleppmomenten (besser) verhindert werden kann.

Nach einer Ausführungsvariante dazu kann vorgesehen sein, dass die zweiten Reibbelagsträger im Bereich zwischen den umgebogenen Seitenkanten und den zweiten Reibbelägen zumindest eine Ausnehmung aufweisen. Es wird damit eine Reduktion des Gewichts der zweiten Reibbelagsträger erreicht, wodurch in der Folge auch bei relativ großen zweiten Reibbelagsträgern eine relativ geringe Massenträgheit erreicht werden kann. Zudem kann über die Ausnehmung auch die Kühlung der zweiten Reibbeläge verbessert werden.

Gemäß einer weiteren Ausführungsvariante kann vorgesehen sein, dass die ersten Reibbeläge mit den ersten Reibbelagsträgern und den Federelementen über zumindest vier Nieten verbunden sind. Anders als zur aus dem Stand der Technik bekannten, üblichen Diagonalvernietung wird durch die Verwendung von zumindest vier Nieten das Aufbiegen der ersten Reibbeläge durch die Einwirkung der Fliehkraft deutlich reduziert bzw. zur Gänze vermieden. Vorzugsweise sind die vier Nieten kleiner ausgeführt als jene, die bei einer Diagonalvernietung verwendet werden.

Es kann weiter vorgesehen sein, dass sämtliche ersten Reibbeläge auf einer - in axialer Richtung der Kupplungsscheibe betrachtet - ersten Seite der Reibbaugruppe und sämtliche zweiten Reibbeläge auf einer zweiten, der ersten Seite gegenüberliegenden zweiten Seite der Reibbaugruppen angeordnet sind, und/oder dass die ersten Reibbeläge und die zweiten Reibbeläge gleich große Reibbflächen aufweisen und in axialer Richtung der Kupplungsscheibe einander überdeckend in den Reibbaugruppen angeordnet sind. Mit beiden Ausführungsvarianten wird eine Verbesserung des Reibverhaltens erreicht, da die Reibbaugruppen innerhalb der Kupplungsscheibe symmetrischer aufgebaut werden können.

Alternativ dazu kann vorgesehen sein, dass die ersten Reibbeläge und die zweiten Reibbeläge auf einer - in axialer Richtung der Kupplungsscheibe betrachtet - ersten Seite der Reibbaugruppe und auf einer zweiten, der ersten Seite gegenüberliegenden Seite der Reibbaugruppen angeordnet sind, wobei die ersten Reibbeläge und die zweiten Reibbeläge in Umfangsrichtung der Kupplungsscheibe alternierend angeordnet sind. Es kann damit erreicht werden, dass die Kupplungsscheibe beim Lüften der Kupplung von der Gegenlamelle abhebt, wodurch wiederum die Erzeugung eines Schleppmomentes (besser) vermieden werden kann. In der Folge kann damit der Verschleiß der Reibbeläge reduziert werden.

Zum besseren Verständnis der Erfindung wird diese anhand der nachfolgenden Figuren näher erläutert.

Es zeigen jeweils in schematisch vereinfachter Darstellung:
- Fig. 1: eine erste Ausführungsvariante einer Kupplungsscheibe in Ansicht in axialer Richtung;
- Fig. 2: einen Querschnitt durch eine flügelartige Reibbaugruppe der Kupplungsscheibe nach Fig. 1;
- Fig. 3: einen Ausschnitt aus einer Ausführungsvariante einer Kupplungsscheibe in Schrägansicht von einer ersten Seite aus betrachtet;
- Fig. 4: den Ausschnitt aus einer Ausführungsvariante einer Kupplungsscheibe in Schrägansicht nach Fig. 3 von einer zweiten Seite aus betrachtet;
- Fig. 5: eine weitere Ausführungsvariante einer flügelartigen Reibbaugruppe in Schrägansicht;
- Fig. 6: einen Ausschnitt aus einer anderen Ausführungsvariante einer Kupplungsscheibe in Schrägansicht und teilweise geschnitten.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

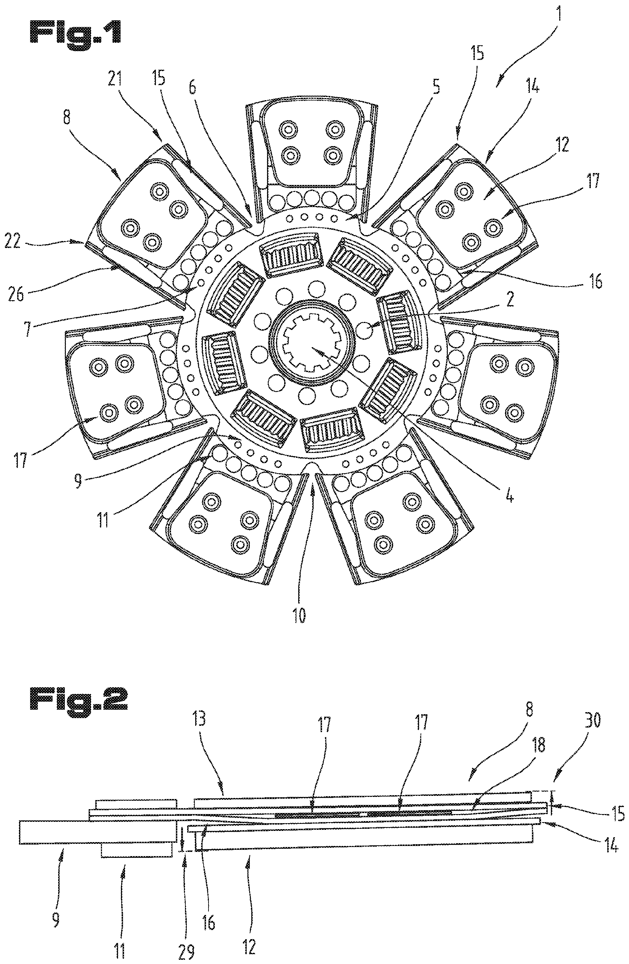

In Fig. 1 ist eine erste Ausführungsvariante einer Kupplungsscheibe 1 für eine an sich aus dem Stand der Technik bekannte Reibungskupplung dargestellt.

Die Kupplungsscheibe 1 entspricht im Wesentlichen jenen, die aus dem Stand der Technik bekannt sind. Mit im Wesentlichen ist dabei gemeint, dass - wie dies im folgenden noch näher erläutert wird - Unterschiede hinsichtlich des Aufbaus in Bezug auf die Außen angeordneten Reibbeläge bestehen.

Demgemäß weist die Kupplungsscheibe 1 einen, insbesondere scheibenförmigen, Grundkörper 2 auf. Am bzw. im Grundkörper 2 sind mehrere Torsionsfedern 3 angeordnet. Zudem ist zentrisch eine Ausnehmung 4 zur Aufnahme einer nicht dargestellten Welle ausgebildet. Da dies prinzipiell aus dem Stand der Technik bekannt ist, sei zu Einzelheiten dazu auf die einschlägige Literatur verwiesen.

Der Grundkörper 2 umfasst ein scheibenförmiges Trägerelement 5. Das Trägerelement 5 ist zumindest im Bereich eines äußeren Umfangs 6 des Grundkörpers 2 angeordnet. Vorzugsweise erstreckt sich das Trägerelement 5 über den gesamten Grundkörper 5, also von der Ausnehmung 4 bis zum äußeren Umfang 6. Die Ausnehmung 4 ist also vorzugsweise (auch) im Trägerelement 5 ausgebildet. Weiter sind bevorzugt die Torsionsfedern 3 in entsprechenden Aufnahmen im Trägerelement 5 angeordnet.

Es besteht weiter die Möglichkeit, dass am Trägerelement 5 beidseitig, insbesondere scheibenförmige, Abdeckelemente (nicht dargestellt) zumindest bereichsweise angeordnet sind.

Vorzugsweise ist das Trägerelement 5 aus einem Metallblech, insbesondere einem Stahlblech, hergestellt.

Es ist weiter bevorzugt, wenn das Trägerelement 5 einstückig ausgebildet ist, also nicht aus mehreren Teilen zusammengesetzt ist.

Am äußeren Umfang 6 des Trägerelementes 5 sind verteilt, insbesondere regelmäßig verteilt, mehrere Aufnahmebereiche 7 zur Aufnahme von flügelartig ausgebildeten Reibbaugruppen 8 angeordnet bzw. ausgebildet. Im in Fig. 1 konkret dargestellten Beispiel der Kupplungsscheibe 1 sind sieben Aufnahmebereiche 7 und dementsprechend sieben Reibbaugruppen 8 vorhanden. Diese Anzahl soll aber für die Erfindung nicht beschränkend verstanden werden. Vielmehr können auch mehr oder weniger Aufnahmebereiche 7 und Reibbaugruppen 8 vorhanden sein.

Die Aufnahmebereich 7 sind durch in radialer Richtung vorstehende Flansche 9 am Trägerelement 5 ausgebildet, insbesondere einstückig mit diesem ausgebildet. Zwischen den Flanschen 9 sind Ausnehmungen 10 ausgebildet, sodass also die einzelnen Flansche 9 in Umfangsrichtung nicht miteinander verbunden sind. Pro Reibbaugruppe 8 ist ein eigener Flansch 9 am Trägerelement 5 angeordnet bzw. ausgebildet.

Die Reibbaugruppen 8 sind in den Aufnahmebereichen 7 mit dem Trägerelement 5 verbunden. Dazu sind bevorzugt sowohl in den Flanschen 9 als auch an den Reibbaugruppen 8 Bohrungen vorgesehen, sodass jeweils ein Reibbaugruppe 8 mit jeweils einem Flansch 9 über mehrere Nieten 11, die sich durch diese Bohrungen erstrecken, verbunden ist.

Anstelle der Nieten 11 oder zusätzlich zu diesen kann die Fixierung, d.h. die Verbindung der Reibbaugruppen 8 mit den Flanschen 9 des Trägerelementes 5 auch formschlüssig erfolgen, beispielsweise indem der dem Aufnahmebereich 7 zugewandte Endbereich der Reibbaugruppe, insbesondere eines Reibbelagsträgers, zumindest annähernd um 90 ° umgebogen ist und in einer entsprechenden schlitzförmigen Aufnahme des Aufnahmebereichs 7 eingesteckt ist. Der Formschluss kann aber beispielsweise auch durch eine schwalbenschwanzförmige Ausbildung des Endbereichs der Reibbaugruppen, die in entsprechend geformten Ausnehmungen in den Aufnahmebereichen 7 eingreifen, ausgebildet sein.

Das Trägerelement 5 erstreckt sich also bei der Kupplungsscheibe 1 nicht bis zu deren Außenumfang bzw. deren Aussendurchmesser.

Prinzipiell sind auch andere Methoden zur Verbindung der Reibbaugruppen 8 mit den Flanschen 9 möglich, wie z.B. Verschraubungen, Schweißungen, etc.

Die Flansche 9 sind am äußeren, den Reibbaugruppen 8 zugewandten Umfang 6 vorzugsweise zumindest annähernd kreisbogenförmig ausgebildet, wie dies aus Fig. 1 ersichtlich ist. Prinzipiell können sie aber auch eine andere Kontur aufweisen.

Jede der Reibbaugruppen 8 der Kupplungsscheibe 1 bildet eine eigene Baugruppe. Die Reibbaugruppen 8 bestehen, wie dies insbesondere auch aus dem Querschnitt in Fig. 2 ersichtlich ist, aus einem ersten Reibbelag 12, einem zweiten Reibbelag 13, einem ersten Reibbelagsträger 14, einem zweiten Reibbelagsträger 15 und einem Federelement 16.

Jeder Reibbaugruppe 8 weist also jeweils nur einen ersten Reibbelag 12 und nur einen zweiten Reibbelag 13 auf.

Vorzugsweise sind sämtliche Reibbaugruppen 8 der Kupplungsscheibe 1 gleich ausgebildet.

Der erste Reibbelag 12 ist mit dem ersten Reibbelagsträger 14 verbunden, insbesondere auf diesen aufgesintert. Es können aber auch andere Verbindungsmethoden angewandt werden. Beispielsweise kann der erste Reibbelag 12 mit dem ersten Reibbelagsträger 14 verklebt sein, oder mit diesem stoffschlüssig verbunden sein, beispielsweise verlötet sein. Daneben besteht aber auch die Möglichkeit der Vernietung (oder gegebenenfalls Verschraubung) des ersten Reibbelags 12 mit dem ersten Reibbelagsträger 14.

Der erste Reibbelagsträger 14 ist vorzugsweise auf das Federelement 16 aufgenietet, wozu Nieten 17 vorgesehen sind.

Das Federelement 16 ist zwischen dem ersten Reibbelagsträger 14 und dem zweiten Reibbelagsträger 15 angeordnet, wobei die Anordnung derart erfolgen kann, dass ausreichend Platz für die Nieten 17 vorhanden ist. Dazu kann das Federelement 16 entsprechend gebogen sein, wie dies in Fig. 2 dargestellt ist, sodass zwischen dem Federelement 14 und dem zweiten Reibbelagsträger 15 ein Zwischenraum 18 ausgebildet ist.

Alternativ dazu kann auch vorgesehen sein, dass im ersten Reibbelagsträger 14 entsprechende Freistellungen ausgebildet sind, die die Nietköpfe der Nieten 17 aufnehmen, sodass die Nietköpfe nicht über den ersten Reibbelagsträger 14 vorragen.

Der zweite Reibbelag 13 ist mit dem zweiten Reibbelagsträger 15 verbunden. Vorzugsweise erfolgt die Verbindung stoffschlüssig, insbesondere durch verlöten, oder über eine Klebeverbindung. Bevorzugt erfolgt die Verbindung des zweiten Reibbelags 13 mit dem zweiten Reibbelagsträger 15 nicht über nieten, sodass dieser also nietenfrei ist.

Sowohl das Federelement 16 als auch der zweite Reibbelagsträger 15 sind direkt mit dem Trägerelement 5, d.h. dem jeweiligen Flansch 9, auf die voranstehend beschriebene Art über die Nieten 11 und/oder formschlüssig verbunden, wozu das Federelement 16 und der zweite Reibbelagsträger 15 in diesem Verbindungsbereich unmittelbar aneinander anliegen, wie dies aus Fig. 2 ersichtlich ist. Vorzugsweise schließen das Federelement 16 und der zweite Reibbelagsträger 15 in diesem Verbindungsbereich mit dem Flansch 9 bündig miteinander ab, wie dies ebenfalls aus Fig. 2 ersichtlich ist.

Es wird durch diese Anordnung, d.h. Befestigung der ersten und zweiten Reibbeläge 12, 13 eine starre Seite im Bereich der zweiten Reibbeläge 13 und eine federnde Seite im Bereich der ersten Reibbeläge 12 in der Reibbaugruppe 8 erreicht.

Die Reibbaugruppen 8 sind zumindest annähernd sternförmig am Trägerelement 5 angeordnet, wie dies aus Fig. 1 ersichtlich ist.

Die ersten Reibbeläge 12 und die zweiten Reibbeläge 13 sind vorzugsweise aus einem hierfür üblichen metallischen oder metall-keramischen Sinterwerkstoff hergestellt. Es besteht aber auch die Möglichkeit, diese aus anderen Werkstoffen, wie z.B. harzgebundenen Faserwerkstoffen herzustellen. Auch diese weiteren Arten an Reibbelägen sind in der einschlägigen Literatur ausführlich beschrieben, sodass an dieser Stelle darauf verwiesen sei.

Hinsichtlich der verwendbaren Kleber zur Ausbildung der Klebestellen sei ebenfalls auf die einschlägige Literatur verwiesen, da die Verklebung von Reibbelägen an sich bekannt ist.

Die ersten Reibbelagsträger 14 können aus einem eisenbasierten Werkstoff bestehen, beispielsweise aus einem Stahl, insbesondere einem Baustahl oder einem Vergütungsstahl.

Die zweiten Reibbelagsträger 15 sind vorzugsweise Lötbleche, z.B. aus einem eisenbasierten Werkstoff, beispielsweise aus einem Stahl, insbesondere einem Baustahl oder einem Vergütungsstahl.

Die Federelemente 16 können aus einem, insbesondere warmfesten, Federstahl bestehen.

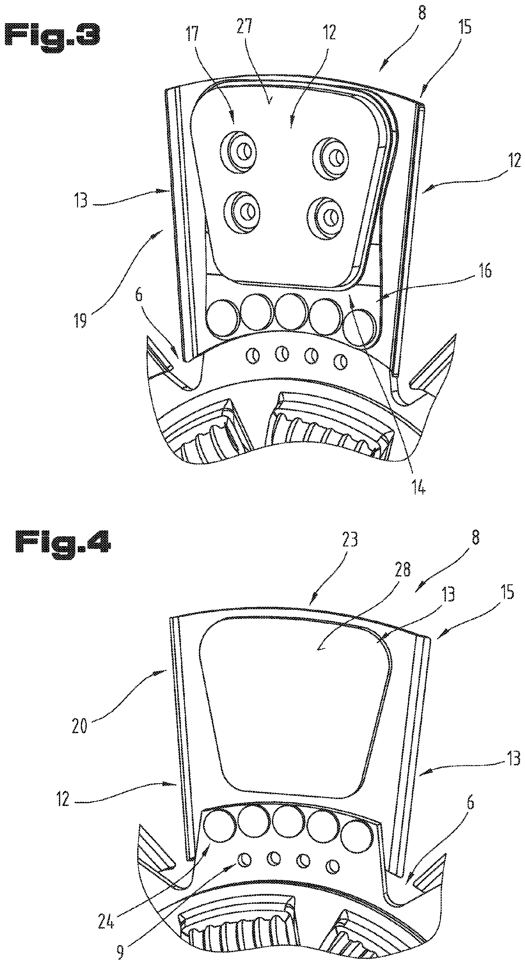

In den Fig. 3 und 4 ist eine weitere und gegebenenfalls für sich eigenständige Ausführungsform Reibbaugruppe 8 gezeigt, wobei wiederum für gleiche Teile gleiche Bezugszeichen bzw. Bauteilbezeichnungen wie in den Fig. 1 und 2 verwendet werden. Um unnötige Wiederholungen zu vermeiden, wird auf die detaillierte Beschreibung zu den Fig. 1 und 2 hingewiesen bzw. Bezug genommen.

Die Ausführungsvariante der Reibbaugruppe 8 in den Fig. 3 und 4 ist in Schrägansicht von zwei Seiten betrachtet dargestellt, sodass also in der Betrachtung auf eine erste Seite 19 (Fig. 3) der erste Reibbelag 12 und in Betrachtung auf eine zweite Seite 20 (Fig. 4) der zweite Reibbelag 13 zu sehen sind. Zu erkennen ist auch das Federelement 16 in Fig. 3 und der zweite Reibbelagsträger 15, der vorzugsweise in Bezug auf die Fläche deutlich größer ist als der erste Reibbelag 12 bzw. der zweite Reibbelag 13. Weiter ist wiederum der erste Reibbelag 12 mit dem ersten Reibbelagsträger 14 verbunden.

Wie deutlich zu sehen ist, weist der zweite Reibbelagsträger 15 in der bevorzugten Ausführungsform umgebogene Seitenkanten 21, 22 auf, wobei beide Seitenkanten 21, 22 in die gleiche Richtung umgebogen sind. Vorzugsweise sind die beiden Seitenkanten 21, 22 in Richtung auf die Seite 19 umgebogen, also in die Richtung, in der der erste Reibbelag 12, also der vernietete Reibbelag 12, angeordnet ist. Es wird damit erreicht, dass das am zweiten Reibbelag zur Verfügung stehende Verschleißvolumen nicht durch die umgebogenen Seitenkanten 21, 22 reduziert wird.

Wie aus den Fig. 3 und 4 zu ersehen ist, ist der zweite Reibbelagsträger deutlich größer als der zweite Reibbelag 13 bzw. der erste Reibbelag 12, sodass also die zweiten Reibbeläge 13 bzw. die ersten Reibbeläge 12 beabstandet zu den in Richtung des äußeren Umfangs 6 nebeneinander ausgebildeten Seitenkanten 21, 22 des zweiten Reibbelagsträgers 15 auf diesen angeordnet sind.

Der Vollständigkeit halber sei angemerkt, dass die beiden Seitenkanten 21, 22 des zweiten Reibbelagsträgers 15 annähernd senkrecht auf die Umfangsrichtung verlaufen. Es sind damit also eine äußerste Stirnseite 23 und eine innere Stirnseite 24 im Bereich des Flansches 9 gemeint.

Wie aus Fig. 1 ersichtlich sind auch bei der in Fig. 1 dargestellten Ausführungsvariante der Kupplungsscheibe 1 die zweiten Reibbelagsträger 15 wie jene in den Fig. 3 und 4 ausgebildet, allerdings mit dem Unterschied, dass die zweiten Reibbelagsträger 15 im Bereich zwischen den umgebogenen Seitenkanten 21, 22 und den ersten Reibbelägen 12 bzw. den zweiten Reibbelägen 13 (in Fig. 1 nicht sichtbar) zumindest eine Ausnehmung 25, 26 aufweisen. Vorzugsweise ist in Bereich jeder Seitenkante zumindest eine Ausnehmung 25, 26 im zweiten Reibbelagsträger 15 ausgebildet. Die Ausnehmungen 25, 26 sind dabei vorzugsweise als Durchbrüche ausgebildet.

Wie weiter aus den Fig. 1 und 3 ersichtlich ist, sind die ersten Reibbelage 12 mit den ersten Reibbelagsträgern und den Federelementen 16 über zumindest vier Nieten 17 verbunden, die in den ersten Reibbelägen 12 versenkt angeordnet sind.

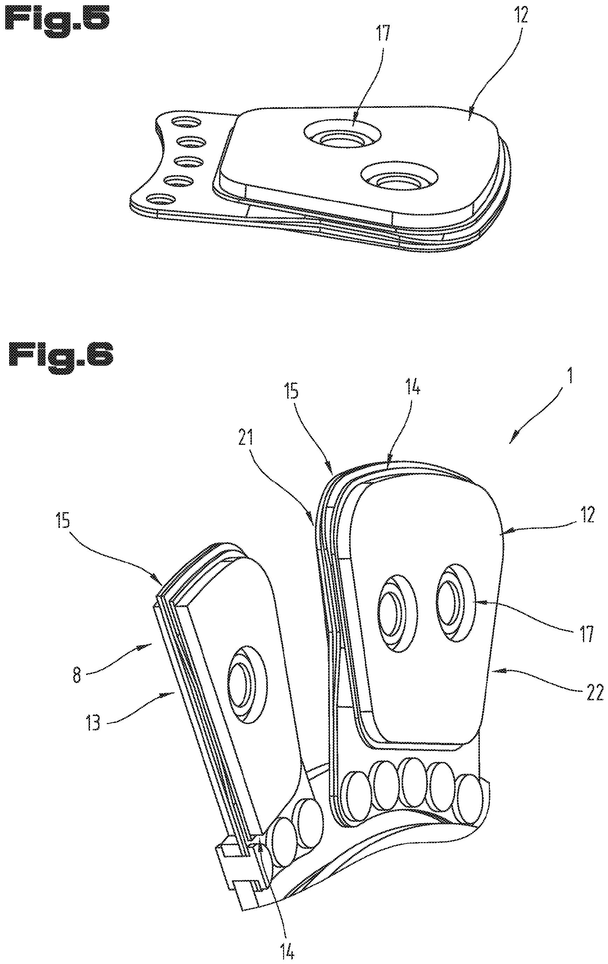

Es besteht aber auch die Möglichkeit der Anordnung von nur zwei Nieten 17, wenngleich dies nicht die bevorzugte Ausführungsvariante ist. In diesem Fall werden die beiden Nieten 17 bevorzugt diagonal angeordnet, wie dies aus Fig. 5 ersichtlich ist.

Bei Verwendung von zumindest vier Nieten 17 sind diese kleiner ausgeführt als bei Verwendung von zwei Nieten 17.

Es ist aber auch möglich die beiden Nieten 17 auf gleicher radialer Höhe angeordnet werden, wie dies aus Fig. 6 ersichtlich ist, die eine weitere Ausführungsvariante der Kupplungsscheibe 1 ausschnittsweise zeigt.

Die Ausführungsvariante der Kupplungsscheibe 1 nach Fig. 6 unterscheidet sich von jener nach Fig. 1 auch dadurch, dass die zweiten Reibbelagsträger 15 keine umgebogenen Seitenkanten 21, 22 aufweisen, und das die zweiten Reibbelagsträger flächenmäßig kaum größer sind als die zweiten Reibbeläge 13.

Darüber hinaus sind auch bei der Ausführungsvariante der Kupplungsscheibe 1 diese und insbesondere die Reibbaugruppen 8 aus den gleichen Bauteilen aufgebaut, sodass zur Vermeidung von Wiederholungen dazu auf die Beschreibung zu Fig. 1 bzw. Fig. 2 verwiesen sei.

Bei sämtlichen Ausführungsvarianten der Kupplungsscheibe 1 sind sämtliche ersten Reibbeläge 12 auf der - in axialer Richtung der Kupplungsscheibe 1 betrachtet - ersten Seite 19 der Reibbaugruppe 8 und sämtliche zweiten Reibbeläge 13 auf der zweiten, der ersten Seite 19 gegenüberliegenden Seite 20 der Reibbaugruppen 8 angeordnet. Vereinfacht ausgedrückt kann die erste Seite 19 auch als Vorderseite und die zweite Seite 20 als Rückseite der Kupplungsscheibe 1 bezeichnet werden, oder umgekehrt.

Es kann aber auch vorgesehen sein, dass sämtliche ersten Reibbeläge 12 auf der zweiten Seite 20 und sämtliche zweiten Reibbeläge 13 auf der ersten Seite 19 der Reibbaugruppe 8 angeordnet sind.

Alternativ dazu kann vorgesehen sein, dass erste Reibbeläge 12 und zweite Reibbeläge 13 sowohl auf der ersten als auch auf der zweiten Seite 19, 20 angeordnet sind, wobei in diesem Fall die Anordnung bevorzugt derart erfolgt, dass die ersten Reibbeläge 12 und die zweiten Reibbeläge 13 in Umfangsrichtung der Kupplungsscheibe 1 alternierend angeordnet sind, d.h dass auf einen ersten Reibbelag 12 in Umfangsrichtung ein zweiter Reibbelag 13, auf diesen wieder ein erster Reibbelag 12, und so weiter, folgt.

Es ist weiter bei sämtlichen Ausführungsvarianten bevorzugt, wenn die ersten Reibbeläge 12 und die zweiten Reibbeläge 13 gleich große Reibbflächen 27, 28 (in Fig. 3 und 4 dargestellt) aufweisen und in axialer Richtung der Kupplungsscheibe 1 einander vollständig überdeckend in den Reibbaugruppen 8 angeordnet sind.

Mit gleich großen Reibflächen 27, 28 ist dabei gemeint, das die ersten und zweiten Reibbeläge 12, 13 die gleichen Außenabmessungen und die gleiche Außenkontur aufweisen.

Mit der Ausbildung der Reibbaugruppen 8 entsprechend den Ausführungsvarianten nach den voranstehenden Ausführungen kann deren Auslenkung aus der Neutrlage in einem ersten Bereich 29 (Fig. 2) im Bereich der Flansche 9 reduziert werden und einem zweiten Bereich 30 (Fig. 2) im Bereich des Außendurchmessers der Kupplungsscheibe 1 erhöht werden, jeweils verglichen mit doppelseitig gefederten Reibbelägen, also ohne starre Seite.

Es wurde eine Flügelauslenkung aus der Neutrallage bei einer Drehzahl von 2000 U/min im ersten Bereich 29 von 0,05 mm und im zweiten Bereich 30 von 0,1 mm gemessen.

Im Vergleich dazu wiesen doppelseitig federelastische Reibbeläge eine Flügelauslenkung bei einer Drehzahl von 2000 U/min im ersten Bereich 29 von 0,11 mm bis 0,14 mm auf.

Durch die höhere Auslenkung der flügelartig ausgebildeten Reibbaugruppen 8 im zweiten Bereich 30, verglichen mit dem ersten Bereich 29, werden die voranstehend genannten Vorteile erreicht.

Es wurden weitere Versuche im Rahmen der Erfindung durchgeführt und zum Vergleich mit entsprechenden Daten zu aus dem Stand der Technik bekannten Kupplungsscheiben verglichen. Die Ergebnisse sind in Tabelle 1 zusammengefasst.

Die Variante Stand der Technik bezeichnet dabei eine Kupplungsscheibe entsprechend Fig. 5 der US 5,857,551 A.

Die Variante zwei Belagsniete steht für eine Kupplungsscheibe 1 bei der die ersten Reibbeläge 12 über jeweils zwei Nieten 17 befestigt sind, wie dies voranstehend ausgeführt wurde.

Die Variante vier Belagsniete steht für eine Kupplungsscheibe 1 bei der die ersten Reibbeläge 12 über jeweils vier Nieten 17 befestigt sind, wie dies voranstehend ausgeführt wurde.

**Tabelle 1: Messdaten**

| Variante | Trägheit [kg/m²] | Masse [kg] | Reibfläche pro Reibbelag mit Niet [mm³] | Reibfläche pro Reibbelag ohne Niet [mm³] | Belags stärke mit Niet [mm] | Belags stärke ohne Niet [mm] | axialer Bauraum geöffnet [mm] |
|---|---|---|---|---|---|---|---|
| Stand der Technik | 0,067 | 5,6 | 3593 | - | 3,57 | - | 12,85 |
| Zwei Belagsnieten | 0,0623 | 5,37 | 3593 | 4119 | 3,57 | 1,87 | 10,19 |
| Vier Belagsnieten | 0,0617 | 5,35 | 3504 | 4119 | 3,45 | 1,9 | 10,1 |

Wie aus Tabelle 1 ersichtlich ist, kann mit den Kupplungsscheiben 1 nach der Erfindung die Massenträgheit reduziert werden, da die Kupplungsscheiben 1 ein geringeres Gewicht aufweisen.

Die Reduzierung der Reibfläche (Spalte 3) in der Ausführungsvariante vier Belagsnieten erklärt sich aus dem Umstand heraus, dass die vier Nieten 17 mehr Platz einnehmen, selbst wenn sie kleiner sind als die zwei Nieten 17 in der Ausführungsvariante zwei Belagsnieten. Die ersten Reibbeläge 12 wiesen aber die gleichen Außenabmessungen und die gleichen Außenkonturen auf, wie die zweiten Reibbeläge 13.

Es ist weiter aus Tabelle 1 ersichtlich, dass mit der Kupplungsscheibe 1 nach der Erfindung der axiale Bauraum deutlich reduziert werden kann (letzte Spalte).

Die Ausführungsbeispiele zeigen mögliche Ausführungsvarianten der Kupplungsscheibe 1, wobei an dieser Stelle bemerkt sei, dass auch diverse Kombinationen der einzelnen Ausführungsvarianten untereinander im Rahmen der Ansprüche möglich sind.

Der Ordnung halber sei abschließend darauf hingewiesen, dass zum besseren Verständnis des Aufbaus der Kupplungsscheibe 1 diese bzw. deren Bestandteile teilweise unmaßstäblich und/oder vergrößert und/oder verkleinert dargestellt wurden.

### Bezugszeichenaufstellung

- 1: Kupplungsscheibe
- 2: Grundkörper
- 3: Torsionsfeder
- 4: Ausnehmung
- 5: Trägerelement

- 6: Umfang
- 7: Aufnahmebereich
- 8: Reibbaugruppe
- 9: Flansch
- 10: Ausnehmung

- 11: Niet
- 12: Reibbelag
- 13: Reibbelag
- 14: Reibbelagsträger
- 15: Reibbelagsträger

- 16: Federelement
- 17: Niet
- 18: Zwischenraum
- 19: Seite
- 20: Seite

- 21: Seitenkante
- 22: Seitenkante
- 23: Stirnseite
- 24: Stirnseite
- 25: Ausnehmung

- 26: Ausnehmung
- 27: Reibfläche
- 28: Reibfläche
- 29: Bereich
- 30: Bereich

## Patentansprüche

1. Kupplungsscheibe (1) für eine Reibungskupplung, umfassend einen scheibenförmigen Grundkörper (2) mit einem Trägerelement (5), wobei das Trägerelement (5) einen äußeren Umfang (6) aufweist, über den verteilt mehrere Aufnahmebereiche (7) für Reibbaugruppen (8) angeordnet sind, wobei die Reibbaugruppen (8) mit dem Trägerelement (5) verbunden sind, wobei die Reibbaugruppen (8) jeweils einen ersten Reibbelag (12) und einen zweiten Reibbelag (13) aufweisen, wobei die ersten Reibbeläge (12) auf ersten Reibbelagsträgern (14) angeordnet sind, die ersten Reibbelagsträger (14) mit einem Federelement (16) verbunden sind und die Federelemente (16) mit dem Trägerelement (5) verbunden sind, und wobei die zweiten Reibbeläge (13) auf zweiten Reibbelagsträgern (15) angeordnet sind, und wobei weiter die Federelemente (16) zwischen den ersten und den zweiten Reibbelagsträgern (14, 15) angeordnet sind, und die zweiten Reibbelagsträger (15) direkt mit dem Trägerelement (5) verbunden sind, **dadurch gekennzeichnet, dass** die Reibbaugruppen (8) flügelartig ausgebildet sind, dass weiter die Aufnahmebereiche (7) durch in radialer Richtung vorstehende Flansche (9) am Trägerelement (5) ausgebildet sind, wobei zwischen den Flanschen (9) Ausnehmungen (10) ausgebildet sind, sodass die einzelnen Flansche (9) in Umfangsrichtung nicht miteinander verbunden sind und pro Reibbaugruppe (8) ein eigener Flansch (9) am Trägerelement (5) angeordnet ist, wobei weiter die flügelartigen Reibbaugruppen (8) in den Aufnahmebereichen (7) mit dem Trägerelement (5) verbunden sind, wozu sowohl das Federelement (16) als auch der zweite Reibbelagsträger (15) direkt dem jeweiligen Flansch (9) über die Nieten (11) und/oder formschlüssig verbunden sind, wozu das Federelement (16) und der zweite Reibbelagsträger (15) in diesem Verbindungsbereich unmittelbar aneinander anliegen.

2. Kupplungsscheibe (1) nach Anspruch 1, **dadurch gekennzeichnet, dass** die zweiten Reibbeläge (13) mit den zweiten Reibbelagsträgern (15) stoffschlüssig oder über eine Klebeverbindung verbunden sind.

3. Kupplungsscheibe (1) nach Anspruch 1 oder 2, **dadurch gekennzeichnet, dass** die zweiten Reibbelagsträger (15) größer sind als die zweiten Reibbeläge (13), sodass die zweiten Reibbeläge (13) beabstandet zu in Richtung des äußeren Umfangs (6) nebeneinander ausgebildeten Seitenkanten (21, 22) der zweiten Reibbelagsträger (15) auf diesen angeordnet sind, wobei die Seitenkanten (21, 22) der zweiten Reibbelagsträger (15) umgebogen sind.

4. Kupplungsscheibe (1) nach Anspruch 3, **dadurch gekennzeichnet, dass** die zweiten Reibbelagsträger (15) im Bereich zwischen den umgebogenen Seitenkanten (21, 22) und den zweiten Reibbelägen (13) zumindest eine Ausnehmung (25, 26) aufweisen.

5. Kupplungsscheibe (1) nach einem der Ansprüche 1 bis 4, **dadurch gekennzeichnet, dass** die ersten Reibbeläge (12) mit den ersten Reibbelagsträgern (14) und den Federelementen (16) über zumindest vier Nieten (17) verbunden sind.

6. Kupplungsscheibe (1) nach einem der Ansprüche 1 bis 5, **dadurch gekennzeichnet, dass** sämtliche ersten Reibbeläge (12) auf einer - in axialer Richtung der Kupplungsscheibe (1) betrachtet - ersten Seite (19) der Reibbaugruppe (8) und sämtliche zweiten Reibbeläge (13) auf einer zweiten, der ersten Seite (19) gegenüberliegenden Seite (20) der Reibbaugruppen (8) angeordnet sind.

7. Kupplungsscheibe (1) nach einem der Ansprüche 1 bis 5, **dadurch gekennzeichnet, dass** die ersten Reibbeläge (12) und die zweiten Reibbeläge (13) auf einer - in axialer Richtung der Kupplungsscheibe (1) betrachtet - ersten Seite (19) der Reibbaugruppe (8) und auf einer zweiten, der ersten Seite (19) gegenüberliegenden Seite (20) der Reibbaugruppen (8) angeordnet sind, wobei die ersten Reibbeläge (12) und die zweiten Reibbeläge (13) in Umfangsrichtung der Kupplungsscheibe (1) alternierend angeordnet sind.

8. Kupplungsscheibe (1) nach einem der Ansprüche 1 bis 6, **dadurch gekennzeichnet, dass** die ersten Reibbeläge (12) und die zweiten Reibbeläge (13) gleich große Reibbflächen (17, 28) aufweisen und in axialer Richtung der Kupplungsscheibe (1) einander überdeckend in den Reibbaugruppen (8) angeordnet sind.

## Claims

1. A clutch disk (1) for a friction clutch, comprising a disk-shaped main part (2) with a support element (5), wherein support element (5) has an outer circumference (6) over which multiple receiving areas (7) for friction components (8) are distributed, wherein the friction components (8) are connected to the support element (5), wherein each friction component (8) has a first friction lining (12) and a second friction lining (13), wherein the first friction linings (12) are arranged on first friction lining supports (14), the first friction lining supports (14) are connected to a spring element (16) and the spring elements (16) are connected to the support element (5), and wherein the second friction linings (13) are arranged on the second friction lining supports (15), and wherein furthermore the spring elements (16) are arranged between the first and the second friction lining supports (14, 15), and the second friction lining supports (15) are directly connected to the support element (5), **characterized in that** the friction components (8) are of a wing-like design, that furthermore the receiving areas (7) are provided in the form of flanges (9) on the support element (5) and project in the radial direction, wherein recesses (10) are provided between the flanges (9) so that the individual flanges (9) are not connected to one another in the circumferential direction and a separate flange (9) is provided on the support element (5) for each friction component (8), wherein furthermore the wing-like friction components (8) are connected to the support element (5) in the receiving areas (7), for which purpose both the spring element (16) and the second friction lining support (15) are directly connected to the respective flange (9) by means of the rivets (11) and/or are connected by a positive fit, for which purpose the spring element (16) and the second friction lining support (15) lie in direct abutment with one another in this connecting region.

2. The clutch disk (1) according to claim 1, **characterized in that** the second friction linings (13) are connected to the second friction lining supports (15) by means of a firmly bonded connection or by means of an adhesive bond.

3. The clutch disk (1) according to claim 1 or 2, **characterized in that** the second friction lining supports (15) are bigger than the second friction linings (13) so that the second friction linings (13) are disposed at a distance apart from the adjacently disposed side edges (21, 22) of the second friction lining supports (15) on which they are disposed in the direction of the outer circumference (6), wherein the side edges (21, 22) of the second friction lining support (15) are bent.

4. The clutch disk (1) according to claim 3, **characterized in that** the second friction lining supports (15) have at least one orifice (25, 26) in the region between the bent side edges (21, 22) and the second friction linings (13).

5. The clutch disk (1) according to any one of claims 1 to 4, **characterized in that** the first friction linings (12) are connected to the first friction lining supports (14) and the spring elements (16) by means of at least four rivets (17).

6. The clutch disk (1) according to any one of claims 1 to 5, **characterized in that** all of the first friction linings (12) are disposed on a first side (19) of the friction component (8) - as viewed in the axial direction of the clutch disk (1) - and all of the second friction linings (13) are disposed on a second side (20) of the friction components (8) lying opposite the first side (19).

7. The clutch disk (1) according to any one of claims 1 to 5, **characterized in that** the first friction linings (12) and the second friction linings (13) are disposed on a first side (19) of the friction component (8) and on a second side (20) of the friction components (8) lying opposite the first side (19) - as viewed in the axial direction of the clutch disk (1) - and the first friction linings (12) and the second friction linings (13) are disposed in an alternating arrangement in the circumferential direction of the clutch disk (1).

8. The clutch disk (1) according to any one of claims 1 to 6, **characterized in that** the first friction linings (12) and the second friction linings (13) have friction surfaces (17, 28) of the same size and are disposed in the friction components (8) in a mutually overlapping arrangement in the axial direction of the clutch disk (1).

## Revendications

1. Disque de couplage (1) pour un embrayage à friction, comprenant un corps de base (2) en forme de disque avec un élément de support (5), l'élément de support (5) comprenant une circonférence externe (6) sur laquelle sont disposés de manière répartie plusieurs zones de logement (7) pour des sous-ensembles de friction (8), les sous-ensembles de friction (8) étant reliés avec l'élément de support (5), les sous-ensembles de friction (8) présentant chacun une première garniture de friction (12) et une deuxième garniture de friction (13), les premières garnitures de friction (12) étant disposées sur des premiers supports de garnitures de friction (14), les premiers supports de garnitures de friction (14) étant reliés avec un élément de ressort (16) et les éléments de ressorts (16) étant reliés avec l'élément de support (5) et les deuxièmes garnitures de friction (13) étant disposées sur de deuxièmes supports de garnitures de friction (15) et les en outre les éléments de ressorts (16) étant disposés entre les premiers et les deuxièmes supports de garnitures de friction (14, 15) et les deuxièmes supports de garnitures de friction (15) étant reliés directement avec l'élément de support (5), **caractérisé en ce que** les sous-ensembles de friction (8) sont conçus comme des ailettes, **en ce qu'**en outre les zones de logement (7) sont constituées par des brides (9) dépassant dans la direction radiale au niveau de l'élément de support (5), moyennant quoi, entre les brides (9) sont réalisées des évidements (10), de façon à ce que les différentes brides (9) dans la direction circonférentielle ne soient pas reliées entre elles et, dans chaque sous-ensemble de friction (8), une bride (9) est disposée sur l'élément de support (5), en outre les sous-ensembles de friction (8) en forme d'ailettes étant reliés, dans les zones de logement (7), avec l'élément de support (5), l'élément de ressort (16) ainsi que le deuxième support de garniture de friction (15) étant pour cela reliés directement avec la bride (9) correspondante par l'intermédiaire des rivets (11) et/ou par complémentarité de forme, l'élément de ressort (16) et le deuxième support de garniture de friction (15) s'appuyant pour cela directement l'un contre l'autre dans cette zone de liaison.

2. Disque de couplage (1) selon la revendication 1, **caractérisé en ce que** les deuxièmes garnitures de friction (13) sont reliées par liaison de matière ou par l'intermédiaire d'une liaison collée avec les deuxièmes supports de garnitures de friction (15).

3. Disque de couplage (1) selon la revendication 1 ou 2, **caractérisé en ce que** les deuxièmes supports de garnitures de friction (15) sont plus grands que les deuxièmes garnitures de friction (13), de façon à ce que les deuxièmes garnitures de friction (13) soient disposées à une certaine distance d'arêtes latérales (21, 22) des deuxièmes supports de garnitures de friction (15), réalisées les unes à côté des autres dans la direction de la circonférence externe (6), sur celles-ci, les arêtes latérales (21, 22) des deuxièmes supports de garnitures de friction (15) étant repliées.

4. Disque de couplage (1) selon la revendication 3, **caractérisé en ce que** les deuxièmes supports de garnitures de friction (15) comprennent, dans la zone entre les arêtes latérales repliées (21, 22) et les deuxièmes garnitures de friction (13), au moins un évidement (25, 26).

5. Disque de couplage (1) selon l'une des revendications 1 à 4, **caractérisé en ce que** les premières garnitures de friction (12) sont reliées avec les premiers supports de garnitures de friction (14) et les éléments de ressorts (16) par l'intermédiaire d'au moins quatre rivets (17).

6. Disque de couplage (1) selon l'une des revendications 1 à 5, **caractérisé en ce que** toutes les premières garnitures de friction (12) sont disposées sur un premier côté (19), vu dans la direction axiale du disque de couplage (1), du sous-ensemble de friction (8) et toutes les deuxièmes garnitures de friction (13) sont disposées sur un deuxième côté (20) des sous-ensembles de friction (8), opposé au premier côté (19).

7. Disque de couplage (1) selon l'une des revendications 1 à 5, **caractérisé en ce que** les premières garnitures de friction (12) et les deuxièmes garnitures de friction (13) sont disposées en alternance sur un premier côté (19), vu dans la direction axiale du disque de couplage (1), du sous-ensemble de friction (8) et sur un deuxième côté (20) des sous-ensembles de friction (8), opposé au premier côté (19), les premières garnitures de friction (12) et les deuxièmes garnitures de friction (13) étant disposées en alternance dans la direction circonférentielle du disque de couplage (1).

8. Disque de couplage (1) selon l'une des revendications 1 à 6, **caractérisé en ce que** les premières garnitures de friction (12) et les deuxièmes garnitures de friction (13) présentant des surfaces de friction (17, 28) de même taille et sont disposées dans les sous-ensembles de friction (8) de façon à se superposer dans la direction axiale du disque de couplage (1).
